# EUROPEAN PATENT SPECIFICATION

(11) **EP 2 390 480 B1**
(45) Date of publication and mention of the grant of the patent: **08.01.2014**
(21) Application number: 11167288.7
(22) Date of filing: 24.05.2011
(51) Int. Cl.: F01N 3/10, F01N 9/00, F01N 3/023, F01N 3/035, F01N 13/02

(54) **Exhaust purification system for internal combustion engine**
Abgasreinigungssystem für einen Verbrennungsmotor
Système de purification d'échappement pour moteur à combustion interne

(30) Priority: 25.05.2010 JP 2010119763
(43) Date of publication of application: 30.11.2011
(73) Proprietor: Honda Motor Co., Ltd., Tokyo 107-8556 (JP)
(72) Inventor: Mori, Takeshi, Saitama 351-0193 (JP); Matsumoto, Takeshi, Saitama 351-0193 (JP); Sugiyama, Tomomi, Saitama 351-0193 (JP); Hirose, Satoshi, Saitama 351-0193 (JP); Seki, Chiaki, Saitama 351-0193 (JP); Mamiya, Hiroyuki, Saitama 351-0193 (JP); Takeuchi, Hiroto, Saitama 351-0193 (JP)
(74) Representative: Herzog, Markus

(56) References cited:
- EP-A1- 1 582 714
- WO-A1-2009/068771
- US-A1- 2003 131 592

## Description

This application is based on and claims the benefit of priority from Japanese Patent Application No. 2010-119763, filed on 25 May 2010, the content of which is incorporated herein by reference.

### BACKGROUND OF THE INVENTION

### Field of the Invention

The present invention relates to an exhaust purification system for an internal combustion engine according to the preamble part of claim 1.

An exhaust purification system of the generic kind is known from EP 1 582 714 A1. A further exhaust purification system for an internal combustion engine is known from US 2011 107 745 A1.

### Related Art

In internal combustion engines installed in an automobile or the like, particularly compression combustion-type internal combustion engines, a large amount of PM is contained in the exhaust discharged therefrom. This PM is harmful to the human body, and is an emission regulation target substance. Therefore, a filter for removing PM is generally provided in the exhaust passage of the above internal combustion engines. A DPF (Diesel Particulate Filter) on which a purification catalyst for purifying captured PM (referred to as CSF (Catalized Soot Filter)) is supported or the like is used as the above filter.

With such a filter, the load is great when PM deposits in excess, and additionally leads to a decline in the output and deterioration of the fuel consumption of the internal combustion engine; therefore, it is necessary to appropriately execute filter regeneration control to combustively remove the PM deposited on the filter. With this filter regeneration control, fuel injection is executed in the exhaust stroke, for example (hereinafter referred to as "post injection").

However, in a vehicle provided with the above such filter, a smaller amount of fuel is preferably required in filter regeneration control due to an improvement in fuel consumption and decline in emissions. Therefore, Patent Documents 1 and 2, for example, disclose technology for reducing the amount of fuel required in order to raise the temperature of the filter by performing filter regeneration control in an operating state in which the exhaust temperature rises.
Patent Document 1: Japanese Unexamined Patent Application Publication No. 2004-13223
Patent Document 2: Japanese Unexamined Patent Application Publication No. 2000-161044

### SUMMARY OF THE INVENTION

However, while the above-mentioned technology described in Patent Documents 1 and 2 can efficiently raise the temperature of the filter by performing filter regeneration control in an operating state such in which the exhaust temperature rises, since it is not possible to improve the combustion efficiency of PM itself, it is not technology contributing greatly to an improvement in fuel consumption or a reduction in emissions.

The present invention has an object of providing an exhaust purification system for internal combustion engines that is adapted to avoid the occurrence of abnormal temperatures during filter regeneration.

In order to achieve the above-mentioned object, the present invention provides an exhaust purification system (e.g., the exhaust purification system 2 described later) for an internal combustion engine (e.g., the engine 1 described later) according to claim 1, including: an exhaust purification device (e.g., the exhaust purification device 3 described later) including a filter (e.g., the DPF 32 described later) that collects particulate matter contained in the exhaust of the internal combustion engine; a regeneration control means (e.g., the ECU 5 and engine 1 described later) for executing filter regeneration control to raise the temperature of the filter and combustively remove particulate matter deposited in the filter; and an accumulation amount estimation means (e.g., the ECU 5 and differential pressure sensor 6 described later) for estimating a particulate matter accumulation amount that is an amount of particulate matter deposited in the filter. The filter includes a particulate matter oxidation catalyst (e.g., the PM oxidation catalyst described later) on which at least Ag is supported, and the regeneration control means initiates the filter regeneration control in response to the particulate matter accumulation amount (e.g., the PM accumulation amount described later) thus estimated having exceeded a predetermined accumulation limit amount (e.g., the PM accumulation limit amount described later) of the filter, and ends the filter regeneration control thus initiated such that particulate matter of a predetermined residual amount (e.g., the PM residual amount described later) remains on the filter after the filter regeneration control ends, without being combustively removed

In the present invention, a filter having a particulate matter oxidation catalyst on which at least Ag is supported is used as the filter to collect particulate matter. Herein, the catalyst on which Ag is supported uses a material that can combust particulate matter at a relatively low temperature, and this low temperature combustion performance is most effectively realized when the accessibility between the particulate matter and catalyst is high.

Upon using such a filter, the regeneration control means of the present invention ends filter regeneration control so that particulate matter of a predetermined residual amount remains in the filter after filter regeneration control ends, without being combustively removed. Herein, a case of executing filter regeneration control to combustively remove the particulate matter deposited, it is considered that the particulate matter combusts from a surface side of the filter at which the accessibility with the particulate matter oxidation catalyst is high. Therefore, according to the present invention, by leaving particulate matter of the above-mentioned predetermined residual amount and ending filter regeneration control without combusting all of the particulate matter deposited, the accessibility of the collected particulate matter with the catalyst raises, and only the portion that can be efficiently combusted with little fuel is combustively removed, then the accessibility with the PM oxidation catalyst declines, and the portion that cannot be efficiently combusted is allowed to remain without being combustively removed. Therefore, according to the present invention, each time executing filter regeneration control, the amount of fuel consumed is greatly reduced compared to a case of completely combustively removing all of the particulate matter deposited, whereby the emissions can also be reduced. It should be noted that combustively removing all of the particulate matter deposited on the filter is referred to as completely regenerating the filter hereinafter. In addition, combustively removing only a portion of the particulate matter deposited so that particulate matter of a significant amount remains in the filter is referred to as partially regenerating the filter.

In addition, the execution time of DPF regeneration control can be shortened by not completely regenerating, but rather partially regenerating the filter in the aforementioned way, and efficiently combustively removing the particulate matter with little fuel. As a result, the time for which the filter is exposed to high temperatures can be shortened; therefore, the thermal load on the filter can be reduced. In addition, since the degradation of the catalysts in the filter due to heat can also be reduced in proportion to an amount by which the thermal load on the filter decreases, it is possible to reduce the noble metal amount of the catalyst by this amount. Therefore, the cost of the exhaust purification system can be reduced.

In addition, the accumulation limit amount is set by subtracting an accumulation portion of ash that cannot be combustively removed and an error portion in an estimation of the particulate matter accumulation amount according to the accumulation amount estimation means, from a limit amount that depends on a material property of the filter.

In addition to particulate matter, inorganic matter contained in the fuel and engine oil also gradually deposits as ash on the filter. Error due to various causes is contained in the estimation of the particulate matter accumulation amount by the accumulation amount estimation means. Therefore, in the present invention, the accumulation limit amount of the filter serving as a trigger to initiate filter regeneration control is set by subtracting the accumulation portion of ash and the error portion of the estimation of particulate matter accumulation amount from the limit amount that depends on the substrate of the filter. It is thereby possible to prevent particulate matter of an amount exceeding the actual limit from depositing on the filter, without filter regeneration control being executed at an appropriate time period.

In this case, it is preferable for the residual amount to be set according to the accumulation limit amount so as to reduce fuel consumption.

If the residual amount approaches zero, the fuel consumption may deteriorate due to the regeneration time lengthening. In addition, conversely, if the residual amount approaches the accumulation limit amount, the regeneration time for becomes shorter; however, the regeneration frequency of will increase, and the fuel consumption may deteriorate as a result. Therefore, in the present invention, the residual amount is set according to the accumulation limit amount so as to reduce the fuel consumption. It is thereby possible to more reliably improve the fuel consumption and reduce emissions.

In this case, it is preferable for the particulate matter accumulation amount of the filter to be estimated, based on a map value according to the revolution speed and fuel injection amount of the internal combustion engine, or on a map value according to differential pressure between an upstream side and a downstream side of the filter.

According to the present invention, the time at which filter regeneration control is initiated or ended can be appropriately determined by estimating the particulate matter accumulation amount of the filter based on a map value according to the revolution speed and fuel injection amount of the internal combustion engine, or on a map value according to differential pressure between an upstream side and a downstream side of the filter.

In this case, it is preferable for the exhaust purification device to include the filter and a catalytic converter (e.g., the catalytic converter 31 described later) including a purification catalyst (e.g., the oxidation catalyst described later) that purifies CO and HC in the exhaust, and for the filter to be provided further downstream in an exhaust passage (e.g., the exhaust plumbing 4 described later) of the internal combustion engine than the catalytic converter.

In the present invention, the filter is provided on a downstream side of the catalytic converter having the above-mentioned purification catalyst. Since it is thereby possible to oxidize injected fuel by the catalytic converter in a case of executing post injection upon execution of filter regeneration control, for example, the filter on the downstream side thereof can be quickly raised in temperature.

In this case, it is preferable for the particulate matter oxidation catalyst to be configured by loading at least Ag on a composite oxide having oxygen release capacity, and for the filter to include, in addition to the particulate matter oxidation catalyst, a purification catalyst (e.g., the oxidation catalyst described later) that purifies CO and HC in the exhaust, and a NO₂ production catalyst (e.g., the NO₂ production catalyst described later) that produces NO₂ from NO in the exhaust.

According to the present invention, since Ag, which is the active species, can be arranged at the contact boundary with particulate matter by configuring the particulate matter oxidation catalyst by loading Ag on a composite oxide, it is possible to improve the accessibility with particulate matter. In addition, composite oxides have high heat resistance. Since agglomeration and volatilization of Ag can be suppressed by loading Ag on such a composite oxide, the heat resistance of the particulate matter oxidation catalyst can be improved.

In addition, composite oxides having oxygen release capacity have high NO₂ adsorptive capacity. As a result, by having the NO₂ production catalyst and the particulate oxidation catalyst containing composite oxides coexist on the same filter, NO₂ produced adsorbs to the surface of the composite oxide having oxygen release capacity, and thus the NO₂ concentration on the surface can be kept high. Consequently, the reaction between NO₂ and particulate matter is further promoted by Ag, and the combustion rate of particulate matter can be improved. Therefore, the time required in filter regeneration control can be further shortened.

In this case, it is preferable for the particulate matter oxidation catalyst to be configured by co-loading at least one noble metal selected from the group consisting of Ru, Pd and Pt, and Ag onto a composite oxide having oxygen release capacity.

According to the present invention, by co-loading the aforementioned such noble metals along with Ag, it becomes possible to improve the oxygen supply capacity from the noble metal, and microparticulate the Ag from the blocking effect by the noble metal. As a result, the oxygen release capacity of the composite oxide can be drastically improved, and the combustion performance for particulate matter can be further improved.

In this case, it is preferable for the NO₂ production catalyst to be configured by loading at least one noble metal selected from the group consisting of Pt, Pd and Rh onto at least one high-specific surface area carrier selected from the group consisting of alumina, silica, titania, ceria and zirconia.

According to the present invention, since the noble metal particles can be miniaturized by loading the above-mentioned noble metals on the above-mentioned high-specific surface area carrier, the performance for oxidizing NO can be improved. In addition, agglomeration of noble metal is suppressed and sulfur poisoning can be further suppressed by loading noble metal on the aforementioned such high-specific surface area carrier.

### BRIEF DESCRIPTION OF THE DRAWINGS

FIG. 1 is a schematic diagram showing the configurations of an engine and an exhaust purification system that purifies the exhaust thereof according to an embodiment of the present invention;
FIG. 2 is a diagram showing the configuration of an exhaust purification device according to the embodiment;
FIG. 3 is a top view showing the configuration of the filter body of a DPF according to the embodiment;
FIG. 4 is a cross-sectional view showing the configuration of the filter body of the DPF according to the embodiment;
FIG. 5 is a graph schematically showing a sequence of DPF regeneration control executed by an ECU according to the embodiment;
FIG. 6 is a graph schematically showing the PM combustion characteristics of the DPF according to the embodiment;
FIG. 7 is a graph illustrating a PM accumulation limit amount according to the embodiment;
FIG. 8 is a chart schematically showing a breakdown of heat load;
FIG. 9 is a graph showing a relationship between the HC purification rates of the exhaust purification devices according to Example 1 and Comparative Examples 1 and 2 after subjected to heat load, and the precision metal content thereof;
FIG. 10 is a graph comparing the time elapsed in regeneration of the DPF for Example 1 and Comparative Example 1;
FIG. 11 is a graph showing a relationship between a PM residual rate and a time reduction rate for Example 1;
FIG. 12 is a graph showing a change in PM deposition amount in a case of partially regenerating to a predetermined PM residual amount at every predetermined regeneration interval;
FIG. 13 is a graph showing a relationship between PM residual amount and PM saturation deposition amount at every regeneration interval;
FIG. 14 is a graph showing the regeneration time of every regeneration interval and a fuel consumption reduction rate; and
FIG. 15 is a graph showing the pressure drop of the DPF when having performed partial regeneration four times.

### DETAILED DESCRIPTION OF THE INVENTION

Hereinafter, an embodiment of the present invention will be explained in detail while referencing the drawings.

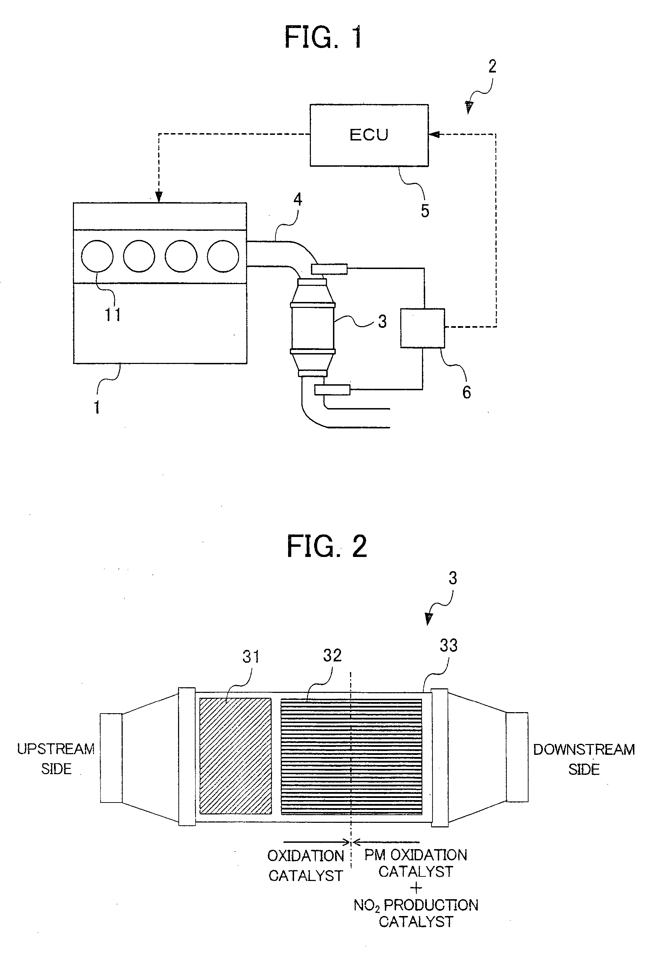

FIG. 1 is a schematic diagram showing a configuration of an internal combustion engine (hereinafter referred to as "engine") 1 and an exhaust purification system 2 that purifies the exhaust thereof according to an embodiment of the present embodiment.

The engine 1 is a diesel engine that directly injects fuel into the combustion chamber of each cylinder 11. An injector (not illustrated) is provided to each cylinder. These injectors are electrically connected to an electronic control unit (hereinafter referred to as "ECU") 5, and the fuel injection amount thereof is controlled by the ECU 5. An exhaust purification device 3 that purifies the exhaust is provided immediately after the engine 1 in exhaust plumbing 4 in which the exhaust of the engine 1 flows.

FIG. 2 is a diagram showing a configuration of the exhaust purification device 3. In FIG. 2, the left side shows the upstream side of the exhaust and the right side shows the downstream side of the exhaust.

The exhaust purification device 3 is configured to include a catalytic converter 31 that purifies the exhaust and a DPF 32 that collects PM contained in the exhaust. In addition, this catalytic converter 31 and DPF 32 are integrally inserted into a casing 33 so that the DPF 32 is positioned on a downstream exhaust side of the catalytic converter 31.

The catalytic converter 31 is configured by coating onto a honeycomb structure a purification catalyst having a function of purifying CO and HC in the exhaust and a function of oxidizing fuel injected by way of post injection described later to raise the temperature of the DPF 32 on the downstream side by way of the oxidation heat thereof. More specifically, this oxidation catalyst is preferably configured by loading at least one element selected from the group consisting of Pt, Pd and Rh.

The DPF 32 is configured by coating onto a wall-flow type filter body various catalysts such as an oxidation catalyst that purifies CO and HC in the exhaust, a PM oxidation catalyst that supports at least Ag and that oxidizes the collected PM, and a NO₂ production catalyst that produces NO₂ from NO in the exhaust.

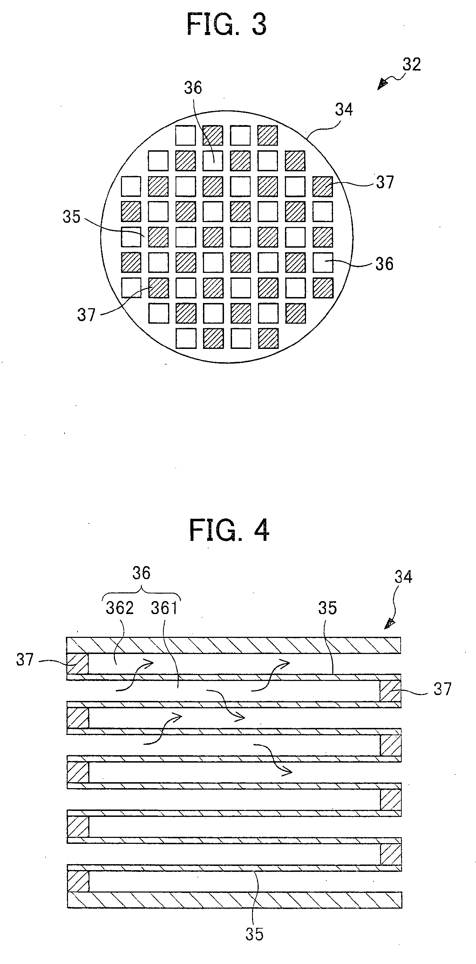

FIG. 3 is a top view showing a configuration of a filter body 34 of the DPF 32, and FIG. 4 is a cross-sectional view showing the configuration of the filter body 34. In FIG. 4, the left side shows the upstream side of the exhaust, and the right side shows the downstream side of the exhaust. The filter body 34 includes a plurality of porous walls 35 that extend along the direction in which the exhaust flows, and a plurality of cells 36 that are defined in form by these porous walls 35 and serve as passages for the exhaust.

As shown in FIG. 4, the cells 36 are divided into upstream side cells 361 and downstream side cells 362, with these upstream side cells 361 and downstream side cells 362 being arranged alternately.

A plug 37 that prevents exhaust from discharging from the inside of the upstream side cell 361 to the downstream side of the filter body 34 is provided at the downstream side of the upstream side cells 361. In addition, a plug 37 that prevents exhaust from flowing from the upstream side of the filter body 34 into the inside of the downstream side cell 362 is provided at the upstream side of the downstream side cells 362. In addition, several pores are formed in the porous walls 35, through which exhaust is able to flow.

Specifically, the exhaust flowing into the filter body 34 first flows into the upstream side cells 361, passes through the porous walls 35, flows into the downstream side cells 362, and then discharges to outside the filter body 34. Herein, when the exhaust passes through the pores of the porous walls 35, PM contained in the exhaust collects in the porous walls 35.

In addition, a well-known material such as SiC, cordierite, aluminum titanate, and mullite can be used as the material of the filter body 34.

Referring back to FIG. 2, in the filter body of the DPF 32, the oxidation catalyst is coated on the upstream exhaust side, and the PM oxidation catalyst and NO₂ production catalyst are coated on the downstream exhaust side. Hereinafter, these catalysts will be explained in detail.

Similarly to the oxidation catalyst of the above-mentioned catalytic converter 31, the oxidation catalyst is preferably a catalyst configured by loading at least one element selected from the group consisting of Pt, Pd and Rh. By coating such an oxidation catalyst onto the filter body of the DPF 32, the exhaust CO and HC purification performance can be supplemented by the catalytic converter 31.

A catalyst configured by loading at least Ag onto a composite oxide having oxygen release capacity is used in the PM oxidation catalyst. Ag-based catalysts containing Ag are considered to be effective catalysts in the combustion of PM. More specifically, it has been known that, in the case of the accessibility with PM being satisfactory, PM is made to ignite from a low temperature (e.g., 200°C or less), whereby PM can be efficiently combusted.

In addition, it is preferable to use at least one type selected from the group consisting of perovskite-type, spinel-type, rutile-type, delafosste-type, magnetoplumbite-type, ilmenite-type, and fluorite-type as the above-mentioned composite oxide having oxygen release capacity. Among these, perovskite-type and fluorite-type are preferably used from the viewpoint of heat resistance.

In addition, the composite oxide is preferably made by combining at least two elements selected from among alkali metals, alkali earth metals, and transition metals, and carries out absorption and release of oxygen by causing the valence of atoms to change.

In addition, it is preferable for at least one element having polyvalence to be contained in order for the composite oxide to have oxygen release capacity. More specifically, it is preferably for at least one transition metal element such as Zr, V, Mn, Fe, Co, Cu, Nb, Ta, Mo, W, Ce, Pr, Sm, Eu, Tb, Yb, Pt, Pd, Rh, Ir and Ru to be contained. Oxygen release is a phenomenon whereby oxygen in the lattice of the composite oxide detaches in order to maintain the balance of electric charge in response to a change in valence of an element configuring the composite oxide. As a result, among the above-mentioned transition metal elements, Ce, Zr, Pr, La and Y are particularly preferable from the viewpoint of oxygen release capacity by combining with Ag. In addition, it is preferable for La, Nd, Y, Sc, Hf, Ca, Sr and Ba, which do not change in valence and have relatively large ionic radii, to be contained from the viewpoint of structural stability.

Furthermore, it is preferable for Ag to be co-loaded on the above-mentioned composite oxide with at least one noble metal selected from the group consisting of Ru, Pd and Pt from the viewpoint of increased oxygen release capacity and Ag refinement. In this case, the added amount of the above-mentioned noble metal is preferable a small amount at 0.1% by mass to 3% by mass relative to the PM oxidation catalyst. More preferably, it is 0.5% by mass to 2% by mass. In a case of being less than 0.5% by mass, the oxygen release capacity will decline, and in a case of being more than 2% by mass, the interaction between the noble metal and composite oxide will strengthen, a result of which the effect of loading Ag may be harmed.

Although the preparation method of the composite oxide of the PM oxidation catalyst is not particularly limited, a conventional well-known preparation method such as the nitrate decomposition method and the organic acid polymerized complex method is preferably employed. In addition, although the method for co-loading Ag and the above-mentioned noble metal on the composite oxide is not particularly limited, a conventional well-known preparation method such as an impregnating method and decomposition-precipitation method is preferably employed.

A catalyst configured by loading at least one noble metal selected from the group consisting of Pt, Pd and Rh onto at least one high-specific surface area carrier selected from the group consisting of alumina, silica, titania, ceria and zirconia is used in the NO₂ production catalyst.

Referring back to FIG. 1, a differential pressure sensor 6 is provided in the exhaust purification device 3 that detects the differential pressure between an upstream side and a downstream side thereof and transmits a signal substantially proportional to the detected value to the ECU 5. The ECU 5 estimates a PM accumulated amount, which is the amount of PM deposited on the DPF of the exhaust purification device 3, based on a map value according to the output of the differential pressure sensor 6.

Since the pressure drop of the exhaust increases and the fuel consumption and emissions degrade when an excessive amount of PM deposits on the DPF of the exhaust purification device 3, it is necessary to suitably execute DPF regeneration control to remove the PM deposited in the DPF and regenerate the DPF. This DPF regeneration control is performed by raising the temperature of the DPF by executing post injection and promoting the oxidation reaction in the catalytic converter of the exhaust purification device 3, to cause the PM deposited in the DPF to combust.

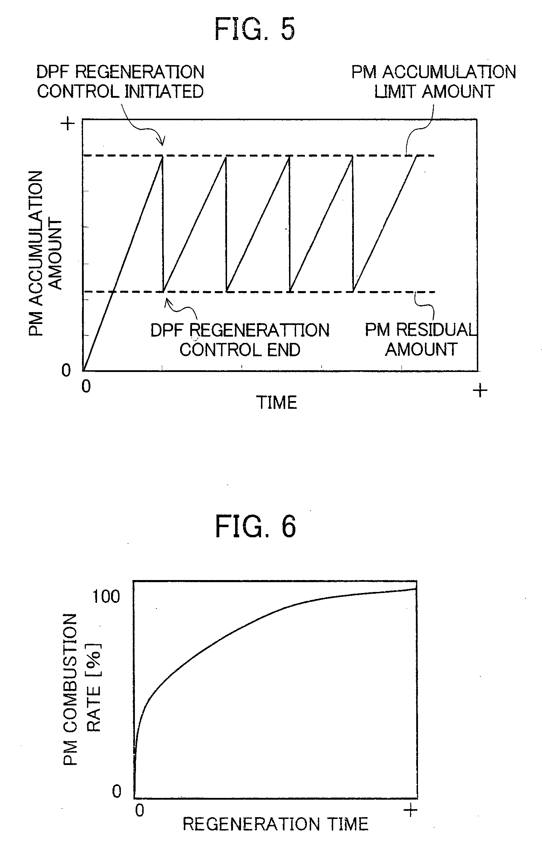

FIG. 5 is a graph schematically illustrating DPF regeneration control executed by the ECU. In FIG. 5, the horizontal axis indicates time and the vertical axis indicates the PM accumulation amount of the DPF.

As shown in FIG. 5, the PM accumulation amount of the DPF increases in accordance with operation of the vehicle. The ECU initiates DPF regeneration control in response to the PM accumulation amount having exceeded a predetermined PM accumulation limit amount, and ends DPF regeneration control initiated as described above so that PM of a predetermined PM residual amount remains without being combustively removed in the DPF after this DPF regeneration control ends.

FIG. 6 is a graph schematically showing the PM combustion characteristic of the DPF of the present embodiment on which the PM oxidation catalyst containing Ag is coated. In FIG. 6, the horizontal axis indicates the time elapsed since initiating DPF regeneration control (regeneration time), and the vertical axis indicates the proportion of the combusted amount, which is the amount of PM combusted since initiating DPF regeneration control, among the total amount of PM deposited on the DPF (PM combustion ratio).

As shown in FIG. 6, for the DPF of the present embodiment, the combustion efficiency at the early stage of regeneration is particularly high, and thus it is possible to combust PM more quickly than at a later stage of regeneration. This is because the PM oxidation catalyst coated on the aforementioned DPF can efficiently combust PM in a case of the accessibility with PM being favorable. Specifically, this is because PM satisfactorily contacting the PM oxidation catalyst is contained more abundantly at the initial stage of regeneration than at a latter stage of regeneration, and this PM combusts efficiently. In the present embodiment, PM satisfactorily contacting the PM oxidation catalyst at the initial stage of regeneration is efficiently combusted by partially regenerating the DPF so that PM of a predetermined PM residual amount remains without being combustively removed, as described above.

Hereinafter, setting of the PM accumulation limit amount and PM residual amount that triggers the initiation and end of DPF regeneration control will be explained.

When DPF regeneration control is executed in a state in which PM of an excessive amount has deposited on the DPF, abnormal temperature may arise after the completion of regeneration control and the DPF may be damaged. As a result, the PM accumulation limit amount serving as a trigger of initiation of the DPF regeneration control must be set to at least a smaller value than a heat-resistance limit amount according to the material properties of the filter body of this DPF.

Furthermore, in addition to PM, a small amount of inorganic matter contained in the fuel and engine oil also gradually deposits as ash on the DPF. Such ash cannot be combustively removed even by executing DPF regeneration control; therefore, it is necessary to design it such that an amount corresponding to the guaranteed distance can certainly be accumulated.

In addition, the PM accumulation amount in the DPF is estimated based on a map value according to the detected value of the differential pressure sensor as described above; however, measurement error is contained in this estimated value of the PM accumulation amount.

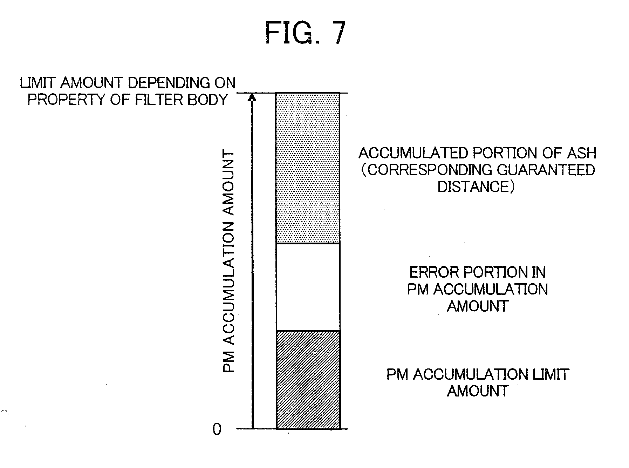

Therefore, taking the above such uncertainty into account, the PM accumulation limit amount is set by subtracting the estimated portion corresponding to the guaranteed distance for which ash cannot be combustively removed and the error portion in the estimation of the PM accumulation amount from the heat-resistance limit amount according to the material properties of the filter body, as shown in FIG. 7.

However, if the PM residual amount approaches zero, the fuel consumption may deteriorate due to the regeneration time lengthening. In addition, conversely, if the PM residual amount is increased and approaches the PM accumulation limit amount, the regeneration time for which the amount of PM combusting decreases becomes shorter; however, the frequency of executing DPF regeneration control will increase, and the fuel consumption may deteriorate as a result. Therefore, this PM residual amount is set to an optimum value by performing a predetermined experiment according to the PM accumulation limit amount so that the overall fuel consumption is minimized when repeatedly executing DPF regeneration control. It should be noted that the sequence of the experiment to find this optimum value of PM residual amount will be explained in detail later.

The following effects are exerted according to the present embodiment.

In the present embodiment, a filter having a PM oxidation catalyst on which at least Ag is supported is used as the DPF to collect PM. Upon using such a DPF, the ECU of the present embodiment ends DPF regeneration control so that PM of a predetermined PM residual amount remains in the DPF after DPF regeneration control ends, without being combustively removed. The accessibility of the collected PM with the PM oxidation catalyst thereby raises, and only the portion that can be efficiently combusted with little fuel is combustively removed, then the accessibility with the PM oxidation catalyst declines, and the portion that cannot be efficiently combusted is allowed to remain without being combustively removed. Therefore, according to the present embodiment, each time executing DPF regeneration control, the amount of fuel consumed is greatly reduced compared to a case of completely combustively removing all of the PM deposited, whereby the emissions can also be reduced.

In addition, the execution time of DPF regeneration control can be shortened by not completely regenerating, but rather partially regenerating the DPF, and efficiently combustively removing the PM with little fuel. As a result, the time for which the DPF is exposed to high temperatures can be shortened; therefore, the thermal load on the DPF can be reduced. In addition, since the degradation of the catalysts in the DPF due to heat can also be reduced in proportion to an amount by which the thermal load on the DPF decreases, it is possible to reduce the noble metal amount of the catalyst by this amount. Therefore, the cost of the exhaust purification system can be reduced.

In the present embodiment, the PM accumulation limit amount of the DPF serving as a trigger to initiate DPF regeneration control is set by subtracting the accumulation portion of ash and the error portion of the estimation of PM accumulation amount from the heat-resistance limit amount according to the filter body of the DPF. It is thereby possible to prevent PM of an amount exceeding the actual limit from depositing on the DPF, without DPF regeneration control being executed at an appropriate time period.

In the present embodiment, the PM residual amount is set according to the PM accumulation limit amount so that the fuel consumption reduces. It is thereby possible to more reliably improve fuel consumption and reduce emissions.

According to the present embodiment, the time at which DPF regeneration control is initiated or ended can be appropriately determined by estimating the PM accumulation amount of the DPF based on a map value according to the detected value of the differential pressure sensor.

In the present embodiment, the DPF is provided on a downstream side of a catalytic converter having an oxidation catalyst. Since it is thereby possible to oxidize injected fuel by the catalytic converter in a case of executing post injection upon execution of DPF regeneration control, for example, the DPF on the downstream side thereof can be quickly raised in temperature.

According to the present embodiment, since Ag, which is the active species, can be arranged at the contact boundary with PM by configuring the PM oxidation catalyst by loading Ag on a composite oxide, it is possible to improve the accessibility with PM. In addition, composite oxides have high heat resistance. Since agglomeration and volatilization of Ag can be suppressed by loading Ag on such a composite oxide, the heat resistance of the PM oxidation catalyst can be improved.

In addition, composite oxides having oxygen release capacity have high NO₂ adsorptive capacity. As a result, by having the NO₂ production catalyst and the PM oxidation catalyst containing composite oxides coexist on the same DPF, NO₂ produced adsorbs to the surface of the composite oxide having oxygen release capacity, and thus the NO₂ concentration on the surface can be kept high. Consequently, the reaction between NO₂ and PM is further promoted by Ag, and the combustion rate of PM can be improved. Therefore, the time required in DPF regeneration control can be further shortened.

According to the present embodiment, by co-loading the aforementioned such noble metals along with Ag, it becomes possible to improve the oxygen supply capacity from the noble metal, and microparticulate the Ag from the blocking effect by the noble metal. As a result, the oxygen release capacity of the composite oxide can be drastically improved, and the combustion performance for PM can be further improved.

According to the present embodiment, since the noble metal particles can be miniaturized by loading the above-mentioned noble metals on the above-mentioned high-specific surface area carrier, the performance for oxidizing NO can be improved. In addition, agglomeration of noble metal is suppressed and sulfur poisoning can be further suppressed by loading noble metal on the aforementioned such high-specific surface area carrier.

It should be noted that the present invention is not to be limited to the above-mentioned embodiment, and modifications, improves, etc. within a scope that can achieve the object of the present invention are also included in the present invention.

For example, although the PM accumulation amount of the DPF was estimated based on a map value according to the detected value of the differential pressure sensor in the above-mentioned embodiment, it is not limited thereto. Since the amount of PM discharged from the engine has a relationship with the revolution speed and fuel injection amount of the engine, the PM accumulation amount of the DPF may be estimated based on a map value according to this revolution speed and fuel injection amount of the engine.

### EXAMPLES

Although examples of the present invention will be explained in the following, the present invention is not to be limited to these examples.

### Example 1

Upon manufacturing the DPF and catalytic converter of the exhaust purification device of Example 1, the three types of catalysts A, B and C shown below were prepared. Preparation of Catalyst A

Catalyst A (PdAg/CeZrO₂), which is the PM oxidation catalyst (catalyst in which silver is loaded on a composite oxide having oxygen release capacity), was prepared in the following sequence. First, a commercially available high-specific surface area ceria zirconia, silver nitrate, palladium nitrate and H₂O were weighed and mixed so as to make a predetermined composition. Next, this was loaded by impregnation in an evaporator, the product thereof was allowed to dry for 1 hour at 200°C, followed by calcining for 2 hours at 700°C, whereby catalyst A was prepared in powder form.

### Preparation of Catalyst B

Catalyst B (PtPd/Al₂O₃), which is the NO₂ production catalyst (catalyst having a function of oxidizing NO to produce NO₂), was prepared in the following sequence. First, a commercially available special grade reagent palladium nitrate, platinum nitrate, γ alumina and H₂O were weighed and mixed so as to make a predetermined composition. Next, this was loaded by impregnation in an evaporator, the product thereof was allowed to dry for 1 hour at 200°C, followed by calcining for 2 hours at 500°C, whereby catalyst B was prepared in powder form.

### Preparation of Catalyst C

Catalyst C (Pt/Al₂O₃), which is the oxidation catalyst (catalyst having a function of purifying HC and CO), was prepared in the following sequence. First, a commercially available special grade reagent platinum nitrate, γ alumina and H₂O were weighed and mixed so as to make a predetermined composition. Next, this was loaded by impregnation in an evaporator, the product thereof was allowed to dry for 1 hour at 200°C, followed by calcining for 2 hours at 500°C, whereby catalyst B was prepared in powder form.

### Manufacture of DPF

A catalyst slurry A was obtained by placing the above-mentioned catalyst A, catalyst B, H₂O, SiO₂ sol and alumina balls in a container, and wet milling overnight with a ball mill. In addition, a catalyst slurry B was prepared by placing the above-mentioned catalyst C, H₂O, SiO sol and alumina balls in a container, and wet milling overnight with a ball mill.

The catalyst slurry A was absorption loaded up to a predetermined height from an outlet surface of a wall-flow type filter body (2 L volume), and excess slurry was removed with suction. Next, this was allowed to dry for 2 hours at 200°C, and then calcined for 2 hours at 500°C.

Subsequently, the catalyst slurry B was absorption loaded up to a predetermined height from an inlet surface the above-mentioned filter body, and excess slurry was removed with suction. Thereafter, this was allowed to dry for 2 hours at 200°C, and then calcined for 2 hours at 500°C.

### Manufacture of Catalytic Converter

A catalyst slurry C was obtained by placing the above-mentioned catalyst C, H₂O, SiO₂ sol and alumina balls in a container, and wet milling overnight with a ball mill.

A honeycomb structure (1 L volume) made of cordierite was immersed in the catalyst slurry C, then extracted therefrom, and excess slurry was removed. Thereafter, this was allowed to dry for 2 hours at 200°C, and then calcined for 2 hours at 500°C.

It should be noted that Example 1 was manufactured such that the combined noble metal amount of the DPF and catalytic converter was 6 g.

### Manufacture of Exhaust Purification System

The DPF and catalytic converter manufactured as described above were assembled in one casing so as to be in the order of catalytic converter then DPF from the upstream side.

### Comparative Example 1

### Manufacture of DPF

A filter body the same as Example 1 was immersed in the catalyst slurry C of Example 1, then extracted therefrom, and excess slurry was removed. Next, this was allowed to dry for 2 hours at 200°C, and then calcined for 2 hours at 500°C.

### Manufacture of Catalytic Converter

A honeycomb structure the same as Example 1 was immersed in the catalyst slurry C of Example 1, then extracted therefrom, and excess slurry was removed. Subsequently, this was allowed to dry for 2 hours at 200°C, and then calcined for 2 hours at 500°C.

It should be noted that, similarly to Example 1, Comparative Example 1 was prepared such that the combined noble metal amount of the DPF and catalytic converter was 6 g.

### Manufacture of Exhaust Purification Device

The DPF and catalytic converter manufactured as described above were assembled in one casing so as to be in the order of catalytic converter then DPF from the upstream side.

### Comparative Example 2

The manufacture of the exhaust purification device of Comparative Example 2 was the same as Comparative Example 1, except for the aspect of being manufactured such that the combined noble metal amount of the DPF and catalytic converter was 3 g.

The configurations of the exhaust purification devices of Example 1 and Comparative Examples 1 and 2 prepared according to the above sequence are listed in the following table.

Evaluation tests 1 to 3 performed using the exhaust purification devices of Example 1 and Comparative Examples 1 and 2 prepared in the above way will be explained along with the results of the setting experiments for the PM residual amount in partial regeneration. It should be noted that a 2.2 L diesel engine was used as the engine in the experiments shown below. In addition, during DPF regeneration control, the engine revolution speed was kept at 2500 rpm, the fuel injection amount was fixed 15mg/st, and the regeneration temperature was kept at 620°C.

**[Table 1]**

| | CATALYTIC CONVERTER | DPF | | NOBLE METAL AMOUNT |
|---|---|---|---|---|
| EXAMPLE 1 | Pt/Al₂O₃ | Pt/Al₂O₃ | AgPd/CeZrO₂ PtPd/Al₂O₃ | 6g |
| COMPARATIVE EXAMPLE 1 | Pt/Al₂O₃ | Pt/Al₂O₃ | | 6g |
| COMPARATIVE EXAMPLE 2 | Pt/Al₂O₃ | Pt/Al₂O₃ | | 3g |

### Evaluation Test 1

As verified in Evaluation Test 2 later, the regeneration time can be shortened by partially regenerating the DPF with the present invention; therefore, the thermal load on the DPF and catalytic converter over their lifetime can be lowered. Therefore, Evaluation Test 1 verifies the effect from reducing the thermal load. More specifically, air aging was performed on the exhaust purification device of Example 1 and Comparative Examples 1 and 2, a thermal load was intentionally applied thereto, and then the HC purification rate of these exhaust purification devices was measured.

With Evaluation Test 1, assuming that the regeneration time could be halved by partially regenerating the DPF, air aging was performed on the exhaust purification devices of Example 1 and Comparative Examples 1 and 2 for a length depending on the regeneration time thereof, and a thermal load was applied. More specifically, air aging was performed for 30 hours at 700°C on the exhaust purification devices of Comparative Examples 1 and 2, and air aging was performed for 20 hours at 700°C on the exhaust purification device of Example 1.

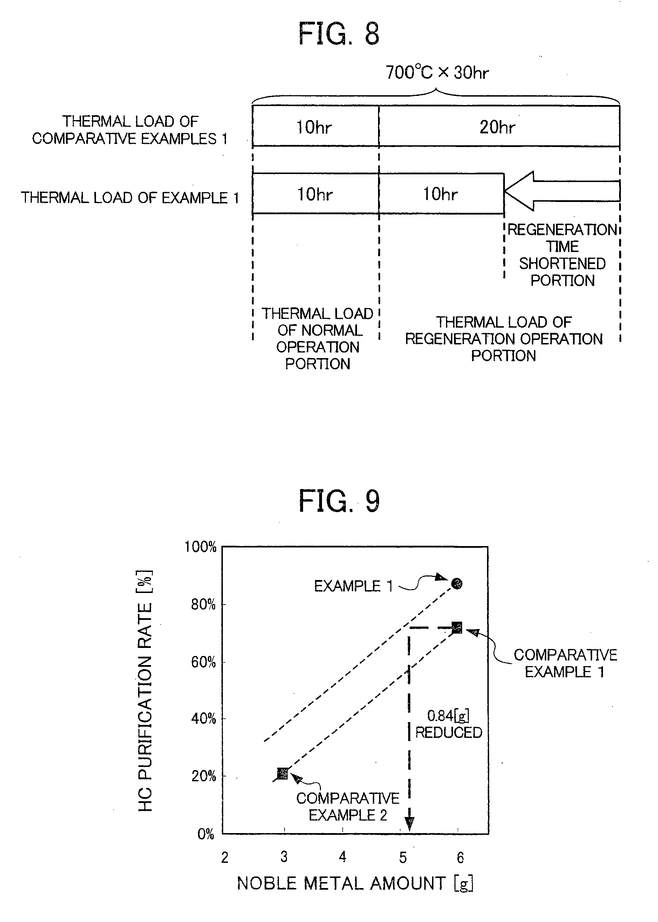

FIG. 8 is a graph schematically showing a breakdown of the thermal load. The thermal load of the 700°C × 10 hour portion, among the thermal load of the 700°C × 30 hour portion applied to the exhaust purification device of Comparative Examples 1 and 2, is the portion applied by carrying out normal operation, and the remaining 700°C × 20 hour portion is the portion applied by performing DPF regeneration control. In contrast, the thermal load applied to the exhaust purification device of Example 1 could be reduced by the 700°C × 10 hour portion by halving the regeneration time.

FIG. 9 is a graph showing a relationship between the HC purification rates of the exhaust purification devices according to Example 1 and Comparative Examples 1 and 2 after subjected to heat load and the precision metal content thereof. It should be noted that the HC purification rate was measured in the European NEDC mode.

In FIG. 9, when the noble metal amount was set from 6 (g) to 3 (g), the HC purification rate also declined from 78% to 58%, as can be seen from comparing Comparative Example 1 and Comparative Example 2. On the other hand, when the thermal load was reduced despite the noble metal amount being the same, the HC purification rate raised from 78% to 85%, as can be seen from comparing Comparative Example 1 and Example 1. This reduced part of the thermal load corresponds to a noble metal amount of 0.84 (g), as shown in FIG. 9. Therefore, by partially regenerating the DPF and shortening the regeneration time as above, it has been confirmed that the noble metal amount can be reduced while decreasing the thermal load on the exhaust purification device.

### Evaluation Test 2

In evaluation test 2, the time elapsed in regeneration of the DPF was compared between Example 1 and Comparative Example 1.

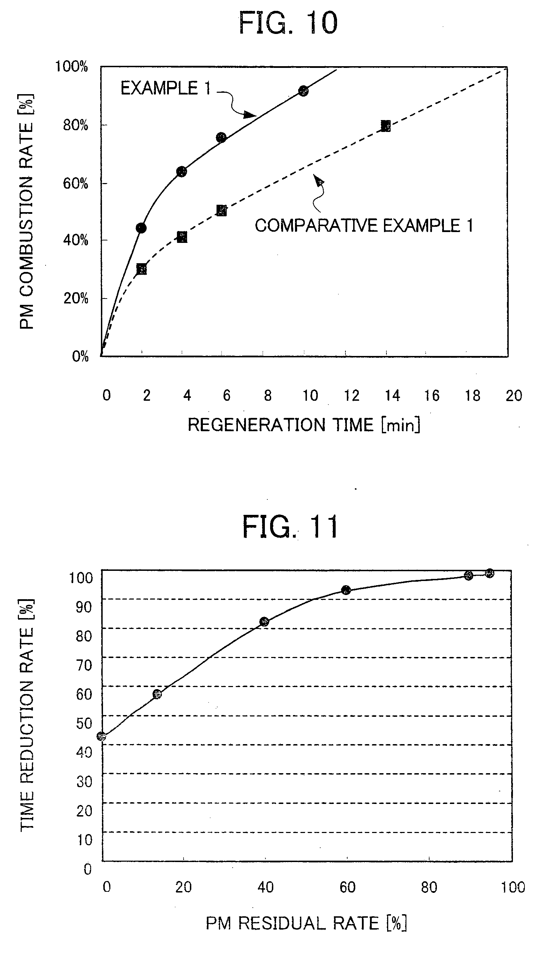

FIG. 10 is a graph showing the results of evaluation test 2, comparing the time elapsed in regeneration of the DPF between Example 1 and Comparative Example 1.

In FIG. 10, the horizontal axis indicates time elapsed since initiating DPF regeneration control (regeneration time (min)), and the vertical axis indicates the proportion of the combusted amount among the total amount of PM deposited in the DPF (PM combustion rate (%)). As shown in FIG. 10, Comparative Example 1 required approximately 20 minutes until PM was completely combusted and regeneration of the DPF was completed; whereas, for Example 1, regeneration of the DPF was completed in approximately 11.5 minutes. In addition, due to the combustion rate of PM in the final stage of regeneration being substantially the same between Example 1 and Comparative Example 1, the difference in the aforementioned time required until the regeneration of the DPF completed is considered to be largely attributed to the difference in combustion rate of PM at the initial stage of regeneration.

Therefore, the aspect of being able to make the combustion rate of PM at the initial stage of regeneration fast by employing a PM oxidation catalyst in which Ag is supported on a composite oxide having oxygen release capacity, and the aspect of being able to shorten the time required in regeneration of the DPF have been verified by this evaluation test 2.

FIG. 11 is a graph showing the results of evaluation test 2, and showing the relationship between the PM residual rate (%) and time reduction rate (%) of Example 1. The PM residual rate of the horizontal axis indicates the proportion of the PM residual amount when partially regenerating the DPF of Example 1 relative to the PM total accumulation amount at DPF regeneration control initiation. The time reduction rate (%) of the vertical axis indicates a proportion of the reduced time of the partial regeneration of the DPF of Example 1 (time required to completely regenerate the DPF of Comparative Example 1 - the time required to partially regenerate the DPF of Example 1) relative to the time required to completely regenerate the DPF of Comparative Example 1.

As shown in FIG. 11, the slope of the time reduction rate in a region in which the PM residual rate is large is smaller than the slope of the time reduction rate in a region in which the PM residual rate is small. Therefore, it has been verified that partially regenerating the DPF can more efficiently combust PM than complete regeneration thereof.
PM Residual Amount Setting Test for Partial Regeneration

The present setting test searches for an optimum value of the PM residual amount in partial regeneration as explained in the above-mentioned embodiment, by repeatedly performing partial regeneration on the exhaust purification device of Example 1 under various conditions.

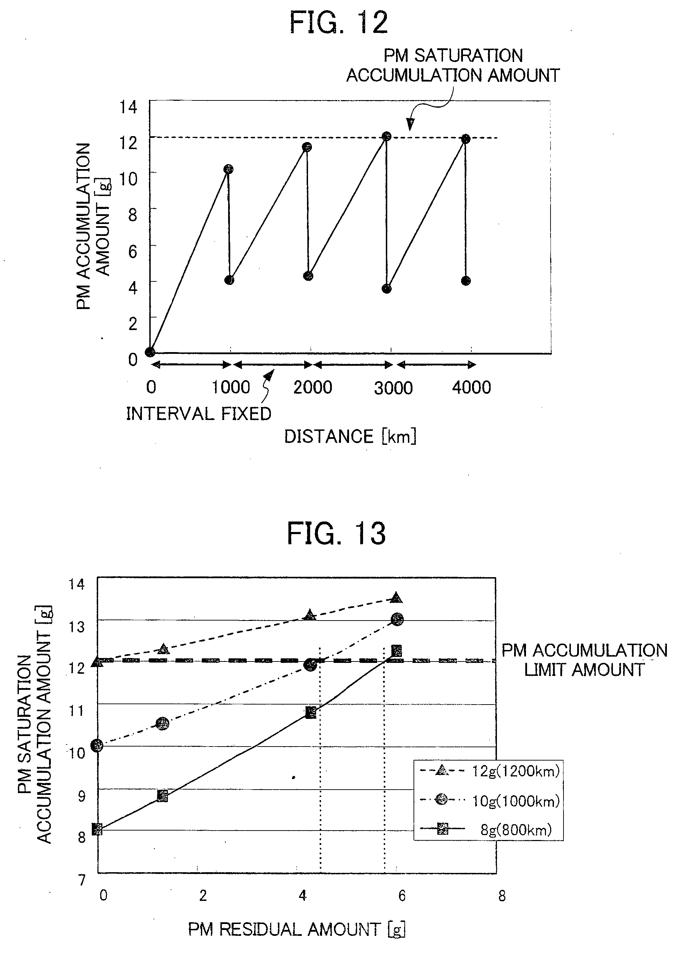

FIG. 12 is a graph showing a change in the PM accumulation amount in a case of partially regenerating to a predetermined PM residual amount at every predetermined regeneration interval.

When executing repeated partial regeneration by fixing the regeneration interval, which is the cycle of executing partial regeneration, and the PM residual amount for partial regeneration, while operating the engine under predetermined operating conditions, the maximum value of the PM accumulation amount converges to a predetermined value. In the present setting test, the maximum value of this PM accumulation amount is defined as the PM saturation accumulation amount, and this PM saturation accumulation amount is measured for every combination of regeneration interval and PM residual amount.

FIG. 13 is a graph showing a relationship between the PM residual amount and the PM saturation deposition amount at every regeneration interval. FIG. 13 shows the relationships between the PM residual amount and the PM saturation accumulation amount in a case of the regeneration interval being set to 800, 1000 and 1200 (km). It should be noted that, although the regeneration interval is in units of distance, since the engine is operated under constant operating conditions, it can be converted to units of amount (g) of PM discharged and collected in the DPF from ending until reinitiating partial regeneration. In a case of converting to units of amount of PM, the above-mentioned regeneration interval becomes 8, 10 and 12 (g), respectively.

As shown in FIG. 13, there is a tendency for the PM saturation accumulation amount to increase when the regeneration interval is lengthened. In addition, when the PM residual amount is increased, the regeneration time shortens in proportion thereto; however, the PM saturation accumulation amount also increases.

Herein, as shown by the thick, dashed line in FIG. 13, it is assumed that the PM accumulation limit amount is set at 12 (g), for example. The PM accumulation limit amount is a threshold value for the PM accumulation amount serving as a trigger to initiate DPF generation control, as explained in the above-mentioned embodiment. Therefore, the upper limit value for the PM residual amount at every regeneration interval is calculated so that the PM saturation accumulation amount does not exceed this PM accumulation limit amount. For example, in a case of the regeneration interval being 800 km, in order to set so that the PM saturation accumulation amount does not exceed the PM accumulation limit amount, it is necessary to set the PM residual amount to approximately 5.8 (g), in a case of the regeneration interval being 1000 km, it is necessary to set the PM residual amount to 4.3 (g), and in a case of the regeneration interval being 1200 km, it is necessary to set the PM residual amount to 0 (g), i.e. completely regenerate. By configuring in the above way, the optimum PM residual amount is calculated at every regeneration interval.

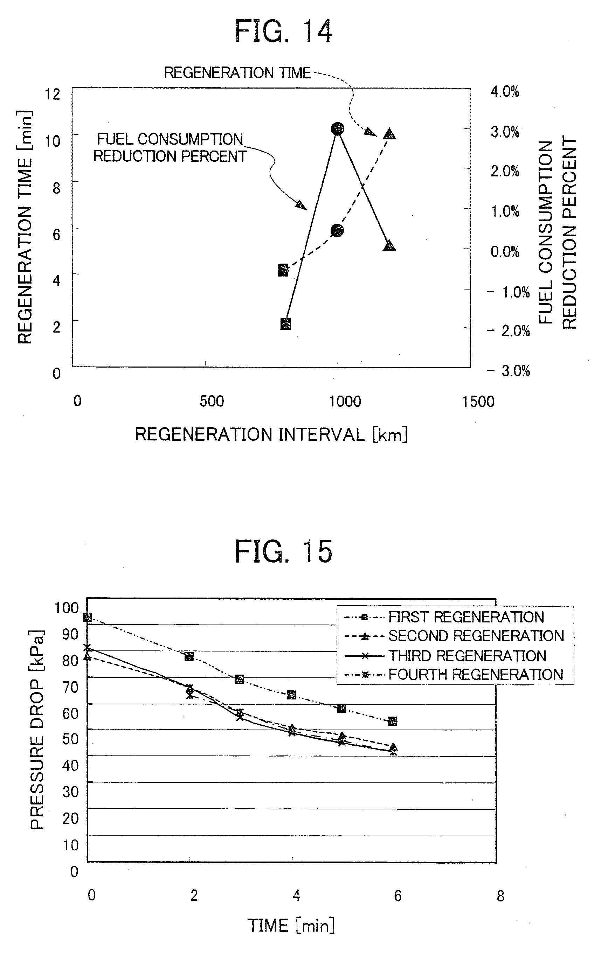

FIG. 14 is a graph showing the regeneration time and fuel consumption reduction percent at every regeneration interval. Herein, regeneration time indicates a time required in one partial regeneration, fuel consumption reduction percent indicates a proportion of the fuel consumption with reference to the fuel consumption when the regeneration interval is 1200 km and complete regeneration is performed as described above. As shown by the dotted line in FIG. 14, the regeneration time shortens accompanying shortening the regeneration interval. However, the regeneration frequency becomes large by simply shortening the time elapsed in partial regeneration for each occurrence. As a result, the fuel consumption conversely deteriorates when the regeneration interval is excessively shortened as can be seen from comparing the case of the regeneration interval being 1200 km with the case of being 800 km, and thus the emissions also increase. However, in the example shown in FIG. 14, between the regeneration intervals of 1200 km to 800 km, the fuel consumption lowers the most when the regeneration interval is near 1000 km. Therefore, according to the above test results, partial regeneration can be repeatedly executed with the best fuel consumption in a case of the PM accumulation limit amount being 12 (g), and in a case of the performing partial regeneration at a regeneration interval of 1000 km. In addition, it is necessary to set the PM residual amount to 4.3 (g) in the case of setting the regeneration interval to 1000 km, to ensure that the PM saturation accumulation amount does not exceed the PM accumulation limit amount as explained with reference to FIG. 13, and thus the optimum value of the PM residual amount is 4.3 (g).

### Evaluation Test 3

In evaluation test 3, repeated partial regeneration was performed on the exhaust purification device of Example 1 in a similar sequence to the aforementioned FIG. 12, and the pressure drop of the DPF was measured at this time.

FIG. 15 is a graph showing the pressure drop of the DPF when performing partial regeneration four times. The horizontal axis indicates the time elapsed since initiating partial regeneration. As shown in FIG. 15, the pressure drop gradually declines due to PM combusting when partial regeneration is initiated. In addition, the pressure drop was the highest during the first partial regeneration execution, and the pressure drop during the second to fourth partial regeneration executions shifted to substantially the same value. The difference in pressure drop between during the first partial regeneration execution and during the second to fourth partial regeneration executions is considered to be due to PM being unplugged from the pores of the DPF during the second and later partial regeneration executions.

Specifically, when PM is collected by the DPF from a state in which no PM has accumulated, the PM first accumulates in the pores of the DPF, and then the PM deposits as a layer on the surface of the DPF. Herein, when executing the first partial regeneration, PM accumulated in the pores having the highest accessibility with the PM oxidation catalyst combusts, and then the PM of a portion according to the PM residual amount set combusts from the surface side of the DPF. Therefore, although a gap can form between the PM layer and the surface of the DPF immediately after the first partial regenerations has completed, this gap is considered to be filled in by the PM layer that is being pressed by the pressure of exhaust until initiating the second partial regeneration. Then, when the second partial regeneration is initiated, the PM contacts with the PM oxidation catalyst of the DPF, whereby efficient partial regeneration is possible again. It should be noted that, when initiating the second partial regeneration, although the amount of PM accumulated in the pores of the DPF is considered to be slight, the amount of PM accumulated in the pores is on the order of 1 (g) at most, in contrast to the amount of PM combusted during partial regeneration of 4 to 6 (g); therefore, the influence on the overall regeneration efficiency is considered to be small. From the above, it has been verified that partial regeneration can be repeatedly executed efficiently.
An exhaust purification system for an internal combustion engine is provided that can drastically reduce the amount of fuel required in filter regeneration. The exhaust purification system includes an exhaust purification device provided with a DPF that collects PM, and an ECU that estimates a PM accumulation amount that is an amount of PM deposited in the DPF, as well as executing filter regeneration control that raises the DPF in temperature and combustively removes the PM deposited in the DPF. The DPF has a PM oxidation catalyst configured by loading at least Ag onto a composite oxide having oxygen release capacity. The ECU initiates DPF regeneration control in response to the PM accumulation amount having exceeded a predetermined PM accumulation limit amount, and ends the DPF regeneration control thus initiated such that PM of a predetermined PM residual amount remains after the DPF regeneration control ends, without being combustively removed.

## Claims

1. An exhaust purification system (2) for an internal combustion engine (1), comprising:
an exhaust purification device (3) including a filter (32) that collects particulate matter contained in the exhaust of the internal combustion engine (1);
a regeneration control means (5) for executing filter regeneration control to raise the temperature of the filter (32) and combustively remove particulate matter deposited in the filter (32); and
an accumulation amount estimation means (5, 6) for estimating a particulate matter accumulation amount that is an amount of particulate matter deposited in the filter (32), wherein
the regeneration control means (5) initiates the filter regeneration control in response to the particulate matter accumulation amount thus estimated having exceeded a predetermined accumulation limit amount of the filter (32), and ends the filter regeneration control thus initiated such that particulate matter of a predetermined residual amount remains on the filter (32) after the filter regeneration control ends, without being combustively removed,
**characterized in that**
the filter (32) comprises a particulate matter oxidation catalyst on which at least Ag is supported,
and **in that** the accumulation limit amount is set by subtracting an accumulation portion of ash that cannot be combustively removed and an error portion in an estimation of the particulate matter accumulation amount according to the accumulation amount estimation means (5, 6), from a limit amount that depends on a material property of the filter (32).

2. An exhaust purification system (2) for an internal combustion engine (1) according to claim 1, **characterized in that** the residual amount is set according to the accumulation limit amount so as to reduce fuel consumption.

3. An exhaust purification system (2) for an internal combustion engine (1) according to any one of claims 1 to 2, **characterized in that** the accumulation amount estimation means (5, 6) estimates the particulate matter accumulation amount of the filter, based on a map value according to the revolution speed and fuel injection amount of the internal combustion engine (1), or on a map value according to differential pressure between an upstream side and a downstream side of the filter (32).

4. An exhaust purification system (2) for an internal combustion engine (1) according to any one of claims 1 to 3, **characterized in that**:
the exhaust purification device (3) comprises the filter (32) and a catalytic converter (31) including a purification catalyst that purifies CO and HC in the exhaust, and
the filter (32) is provided further downstream in an exhaust passage (4) of the internal combustion engine (1) than the catalytic converter (31).

5. An exhaust purification system (2) for an internal combustion engine (1) according to claim 4, **characterized in that**:
the particulate matter oxidation catalyst is configured by loading at least Ag on a composite oxide having oxygen release capacity, and
the filter (32) includes, in addition to the particulate matter oxidation catalyst, a purification catalyst that purifies CO and HC in the exhaust, and a NO₂ production catalyst that produces NO₂ from NO in the exhaust.

6. An exhaust purification system (2) for an internal combustion engine (1) according to claim 5, **characterized in that** the particulate matter oxidation catalyst is configured by co-loading at least one noble metal selected from the group consisting of Ru, Pd and Pt, and Ag onto a composite oxide having oxygen release capacity.

7. An exhaust purification system (2) for an internal combustion engine (1) according to claim 5, **characterized in that** the NO₂ production catalyst is configured by loading at least one noble metal selected from the group consisting of Pt, Pd and Rh onto at least one high-specific surface area carrier selected from the group consisting of alumina, silica, titania, ceria and zirconia.

## Patentansprüche

1. Abgasreinigungssystem (2) für einen Verbrennungsmotor (1) umfassend:
eine Abgasreinigungsvorrichtung (3) umfassend einen Filter (32), welcher in dem Abgas des Verbrennungsmotors (1) enthaltenen Feinstaub sammelt;
Regenerations-Regelungs-/Steuerungsmittel (5) zum Ausführen einer Filterregenerations-Regelung/Steuerung, um die Temperatur des Filters (32) zu erhöhen und um in dem Filter (32) abgelagerten Feinstaub durch Verbrennung zu entfernen; und
Ansammlungsmengenschätzmittel (5, 6) zum Schätzen einer Feinstaubansammlungsmenge, welche eine in dem Filter (32) abgelagerte Feinstaubmenge ist, wobei
die Regenerations-Regelungs-/Steuerungsmittel (5) die Filterregenerations-Regelung/Steuerung als Antwort auf ein Überschreiten der dadurch geschätzten Feinstaubansammlungsmenge einer vorgegebenen Ansammlungsgrenzmenge des Filters (32) starten und die dadurch gestartete Filterregenerations-Regelung/Steuerung beenden, so dass Feinstaub einer vorgegebenen Restmenge an dem Filter (32) verbleibt, nachdem die Filterregenerations-Regelung/Steuerung endet, ohne durch Verbrennung entfernt worden zu sein,
**dadurch gekennzeichnet, dass** der Filter (32) einen Feinstauboxidationskatalysator umfasst, an welchem wenigstens Ag getragen ist, und dass die Ansammlungsgrenzmenge eingestellt wird, indem eine Ansammlungsmenge von Asche, welche nicht durch Verbrennung entfernt werden kann, und ein Fehlerbetrag bei der Schätzung der Feinstaubansammlungsmenge gemäß den Ansammlungsmengenschätzmitteln (5, 6) von einer Grenzmenge, welche von einer Materialeigenschaft des Filters (32) abhängt, subtrahiert werden.

2. Abgasreinigungssystem (2) für einen Verbrennungsmotor (1) nach Anspruch 1,
**dadurch gekennzeichnet, dass** die Restmenge gemäß der Ansammlungsgrenzmenge derart eingestellt wird, dass der Treibstoffverbrauch verringert wird.

3. Abgasreinigungssystem (2) für einen Verbrennungsmotor (1) nach einem der Ansprüche 1 bis 2,
**dadurch gekennzeichnet, dass** die Ansammlungsmengenschätzmittel (5, 6) die Feinstaubansammlungsmenge des Filters basierend auf einem Kartenwert gemäß der Drehzahl und der Kraftstoffeinspritzmenge des Verbrennungsmotors (1) oder basierend auf einem Kartenwert gemäß einem differenziellen Druck zwischen einer stromaufwärtigen Seite und einer stromabwärtigen Seite des Filters (32) schätzen.

4. Abgasreinigungssystem (2) für einen Verbrennungsmotor (1) nach einem der Ansprüche 1 bis 3,
**dadurch gekennzeichnet, dass** die Abgasreinigungsvorrichtung (3) den Filter (32) und einen katalytischen Wandler (31) umfasst, welcher einen Reinigungskatalysator enthält, welcher CO und HC in dem Abgas reinigt, und
dass der Filter (32) weiter stromabwärts in einem Abgasdurchgang (4) des Verbrennungsmotors (1) als der katalytische Wandler (31) bereitgestellt ist.

5. Abgasreinigungssystem (2) für einen Verbrennungsmotor (1) nach Anspruch 4,
**dadurch gekennzeichnet, dass** der Feinstauboxidationskatalysator durch Beladen von wenigstens Ag auf ein zusammengesetztes Oxid eingerichtet ist, welches eine Sauerstofffreisetzungskapazität aufweist, und dass der Filter (32) zusätzlich zu dem Feinstauboxidationskatalysator einen Reinigungskatalysator, welcher CO und HC in dem Abgas reinigt, und einen NO₂-Erzeugungskatalysator, welcher NO₂ aus NO in dem Abgas erzeugt, enthält.

6. Abgasreinigungssystem (2) für einen Verbrennungsmotor (1) nach Anspruch 5,
**dadurch gekennzeichnet, dass** der Feinstauboxidationskatalysator durch zusätzliches Beladen von wenigstens einem Edelmetall, welches ausgewählt ist aus der Gruppe bestehend aus Ru, Pd und Pt, und Ag auf ein zusammengesetztes Oxid eingerichtet ist, welches eine Sauerstofffreisetzungskapazität aufweist.

7. Abgasreinigungssystem (2) für einen Verbrennungsmotor (1) nach Anspruch 5,
**dadurch gekennzeichnet, dass** der NO₂-Erzeugungskatalysator durch Beladen von wenigstens einem Edelmetall, welches ausgewählt ist aus der Gruppe bestehend aus Pt, Pd und Rh, auf wenigstens einen Träger mit einer hohen spezifischen Oberfläche eingerichtet ist, welcher aus der Gruppe, bestehend aus Aluminiumoxid, Siliziumoxid, Titanoxid, Ceroxid und Zirkoniumoxid, ausgewählt ist.

## Revendications

1. Système de purification d'échappement (2) pour moteur à combustion interne (1), comprenant:
un dispositif de purification d'échappement (3) incluant un filtre (32) qui collecte des particules de matière contenues dans l'échappement du moteur à combustion interne (1);
un moyen de commande de régénération (5) pour l'exécution d'une commande de régénération du filtre afin d'augmenter la température du filtre (32) et d'éliminer par combustion les particules de matière déposées dans le filtre (32); et
un moyen d'estimation de la quantité d'accumulation (5, 6) pour estimer une quantité d'accumulation de particules de matière qui est une quantité de particules de matière déposées dans le filtre (32), dans lequel
le moyen de commande de régénération (5) lance la commande de régénération en réaction au fait que la quantité d'accumulation de particules de matière ainsi estimée a dépassé une limite d'accumulation prédéterminée du filtre (32), et termine la commande de régénération du filtre ainsi lancée de telle façon qu'une quantité résiduelle prédéterminée de particules de matière reste sur le filtre (32) après la fin de la commande de régénération du filtre, sans être éliminée par combustion, **caractérisé en ce que**
le filtre (32) comprend un catalyseur d'oxydation de particules de matière qui porte au moins Ag,
et **en ce que** la quantité limite d'accumulation est définie en soustrayant d'une quantité limite qui dépend d'une propriété de matériau du filtre (32) une partie d'accumulation de cendres qui ne peuvent pas être éliminées par combustion et une partie d'erreur dans l'estimation de la quantité d'accumulation de particules de matière suivant le moyen d'estimation de la quantité d'accumulation de particules de matière (5, 6).

2. Système de purification d'échappement (2) pour moteur à combustion interne (1) suivant la revendication 1, **caractérisé en ce que** la quantité résiduelle est définie suivant la quantité limite d'accumulation de façon à réduire la consommation de carburant.

3. Système de purification d'échappement (2) pour moteur à combustion interne (1) suivant l'une des revendications 1 à 2, **caractérisé en ce que** le moyen d'estimation de la quantité d'accumulation (5, 6) estime la quantité d'accumulation de particules de matière du filtre sur base d'une valeur cartographiée en fonction de la vitesse de révolution et de la quantité d'injection de carburant du moteur à combustion interne (1), ou d'une valeur cartographiée en fonction de la pression différentielle entre un côté amont et un côté aval du filtre (32).

4. Système de purification d'échappement (2) pour moteur à combustion interne (1) suivant l'une quelconque des revendications 1 à 3, **caractérisé en ce que**:
le dispositif de purification d'échappement (3) comprend le filtre (32) et un convertisseur catalytique (31) incluant un catalyseur de purification qui purifie le CO et les HC dans l'échappement, et
le filtre (32) est prévu dans un passage d'échappement (4) du moteur à combustion interne (1) situé plus en aval que le convertisseur catalytique (31).

5. Système de purification d'échappement (2) pour moteur à combustion interne (1) suivant la revendication 4, **caractérisé en ce que**:
le catalyseur d'oxydation des particules de matière est configuré par le chargement d'au moins Ag sur un oxyde composite ayant une capacité de libération d'oxygène, et
le filtre (32) inclut, en plus du catalyseur d'oxydation des particules de matière, un catalyseur de purification qui purifie le CO et les HC dans l'échappement et d'un catalyseur de production de NO₂ qui produit du NO₂ à partir du NO dans l'échappement.

6. Système de purification d'échappement (2) pour moteur à combustion interne (1) suivant la revendication 5, **caractérisé en ce que** le catalyseur d'oxydation de particules de matière est configuré par le co-chargement d'au moins un métal noble sélectionné parmi le groupe constitué de Ru, Pd et Pt et Ag sur un oxyde composite ayant une capacité de libération d'oxygène.

7. Système de purification d'échappement (2) pour moteur à combustion interne (1) suivant la revendication 5, **caractérisé en ce que** le catalyseur de production de NO₂ est configuré par le chargement d'au moins un métal noble sélectionné parmi le groupe constitué de Pt, Pd et Rh sur au moins une zone porteuse de haute surface spécifique sélectionnée parmi le groupe constitué de l'alumine, la silice, le dioxyde de titane, l'oxyde de cérium et la zircone.
